# EUROPÄISCHE PATENTANMELDUNG

(11) **EP 2 657 949 A1**
(43) Veröffentlichungstag der Anmeldung: **30.10.2013**
(21) Anmeldenummer: 13163839.7
(22) Anmeldetag: 16.04.2013
(51) Int. Cl.: H01H 23/02

(54) **Elektro-Installationsgerät, insbesondere Installationsschalter, mit Funktionshinweis**

(30) Priorität: 26.04.2012 DE 102012008460
(71) Anmelder: ABB AG, 68309 Mannheim (DE)
(72) Erfinder: Kruppa, Christian, 44651 Herne (DE); Krummel, Holger, 58515 Lüdenscheid (DE); Zierach, Falk, 58513 Lüdenscheid (DE)

(57) **Zusammenfassung**

Es wird ein Elektro-Installationsgerät mit Funktionshinweis vorgeschlagen, wobei ein Display (4) in der Zentralscheibe oder im Abdeckrahmen integriert und mit einer Display-Ansteuereinheit (11) verbunden ist und wobei Mittel zur Vorgabe und Änderung des aktuell anzuzeigenden Funktionshinweises vorgesehen sind. Insbesondere wird ein elektrischer Installationsschalter (1) mit Funktionshinweis vorgeschlagen, bei welchem ein Display (4) in die Frontseite einer zur Betätigung einer Schalteinrichtung (9) dienenden mechanischen Wippe (3) integriert und über eine Display-Ansteuereinheit (11) und eine Bus-Anschlusseinheit (12) mit einem Bussystem verbunden ist, wobei der gewünschte Funktionshinweis über das Bussystem vorgegeben und beim Display (4) zur Anzeige gebracht wird.

## Beschreibung

Die Erfindung betrifft ein Elektro-Installationsgerät, insbesondere Installationsschalter, mit Funktionshinweis. Eine Anwendung kann beispielsweise bei Schaltern / Tastern für Beleuchtungszwecke, bei Dimmern, bei Jalousie-Schaltern und bei Steckdosen erfolgen.

Aus der DE 88 07 213 U1 ist ein elektrisches Installationsgerät mit einem in einer Unterputz-Einbaudose verankerten und mindestens ein schlüssellochartiges Befestigungsloch aufweisenden Tragring, einem Abdeckrahmen sowie einem Bezeichnungsschildträger bekannt, wobei im Abdeckrahmen mindestens ein Sichtfenster eingelassen ist. Der Bezeichnungsschildträger ist unter Anpassung an die jeweilige Formgebung des Abdeckrahmens auf der dem Abdeckrahmen zugekehrten Oberfläche des Tragrings zwischen dem Tragring und dem Abdeckrahmen festgelegt.

Mit derartigen Bezeichnungsschildern können Funktionshinweise in Textform gegeben werden, welche elektrischen Verbraucher mit welchen Installationsgeräten in elektrisch leitender Verbindung stehen und von diesen geschaltet werden. Allerdings ist diese Kennzeichnung mittels Papier kostenaufwändig und zeitaufwändig, da die Papierschilder zunächst erstellt und anschließend in einen speziellen Rahmen eingeführt werden müssen. Des Weiteren stören derartige Bezeichnungsschilder das Aussehen des elektrischen Installationsschalters. Schließlich ist eine Änderung der Textform sehr aufwändig.

Der Erfindung liegt die Aufgabe zugrunde, ein optimiertes Elektro-Installationsgerät, insbesondere Installationsschalter, mit Funktionshinweis anzugeben.

Diese Aufgabe wird erfindungsgemäß gelöst durch ein Elektro-Installationsgerät mit Funktionshinweis, wobei ein Display in der Zentralscheibe oder im Abdeckrahmen integriert und mit einer Display-Ansteuereinheit verbunden ist, wobei Mittel zur Vorgabe und Änderung des aktuell anzuzeigenden Funktionshinweises vorgesehen sind.

Die mit der Erfindung erzielbaren Vorteile bestehen insbesondere darin, dass die Kennzeichnung der speziellen Funktion des Elektro-Installationsgerätes - beispielsweise eines Schalters, einer Drehdimmers oder einer Steckdose - in einfacher Weise erfolgen kann. Des Weiteren ist eine Änderung der Funktion oder eine Änderung der für den Funktionshinweis gewählten Sprache einfach möglich. Trotz dieses Zusatznutzens bleibt die einfache und konventionelle Bedienung des Elektro-Installationsgeräts, im Besonderen eines elektrischen Installationsschalters mit mechanischer Wippe erhalten. Das Aussehen (Design) wird nicht durch relativ unschöne Bezeichnungsschilder gestört.

Als Mittel zur Vorgabe und Änderung des aktuell anzuzeigenden Funktionshinweises kann beispielsweise eine Bus-Anschlusseinheit dienen, welche mit der Display-Ansteuereinheit verbunden ist, wobei die Bus-Anschlusseinheit mit einem Bussystem verbunden ist und der gewünschte Funktionshinweis über das Bussystem vorgegeben und beim Display zur Anzeige gebracht wird.

Als Mittel zur Vorgabe und Änderung des aktuell anzuzeigenden Funktionshinweises kann alternativ hierzu eine Funkeinrichtung dienen, welche mit der Display-Ansteuereinheit verbunden ist, wobei der Funkeinrichtung der gewünschte Funktionshinweis beispielsweise durch ein externes mobiles Gerät, beispielsweise ein Smartphone, vorgegeben und beim Display zur Anzeige gebracht wird.

Als Mittel zur Vorgabe und Änderung des aktuell anzuzeigenden Funktionshinweises kann alternativ eine lokale Schnittstelle dienen, welche mit der Display-Ansteuereinheit verbunden ist, wobei der lokalen Schnittstelle beispielsweise durch ein externes mobiles Gerät, beispielsweise einen mobilen Rechner, der gewünschte Funktionshinweis vorgegeben und beim Display zur Anzeige gebracht wird.

Vorteilhaft kann vorzugsweise ein Display in die Frontseite einer zur Betätigung einer Schalteinrichtung dienenden mechanischen Wippe integriert sein. Hierdurch wird insbesondere ein elektrischer Installationsschalter mit Funktionshinweis vorgeschlagen, wobei ein Display in die Frontseite einer zur Betätigung einer Schalteinrichtung dienenden mechanischen Wippe integriert und über eine Display-Ansteuereinheit und eine Bus-Anschlusseinheit mit einem Bussystem verbunden ist und wobei der gewünschte Funktionshinweis über das Bussystem vorgegeben und beim Display zur Anzeige gebracht wird.

Zweckmäßig kann das Display einen elektrischen Anschlussblock aufweisen, welcher im montierten Zustand elektrisch kontaktierend mit einem korrespondierend ausgebildeten Display-Anschlussblock des Gerätesockels verbunden ist.

Das Display kann beispielsweise als OLED-Dünnfilmbauelement (Organic Light Emitting Diode) oder alternativ in Form eines Elektronischen Papiers (E-Papier, E-Ink) ausgebildet sein.

In vorteilhafter Weiterbildung kann automatisch eine Änderung des Funktionshinweises in Abhängigkeit einer Betätigung des Elektro-Installationsgeräts erfolgen, beispielsweise "An" oder "Aus" für den aktuellen Zustand einer mittels eines Installationsschalters geschalteten Beleuchtung.

In ähnlicher Weise kann automatisch eine Änderung des Funktionshinweises in Abhängigkeit vom elektrischen Zustand des Elektro-Installationsgeräts erfolgen, beispielsweise "geschaltet" oder "bestromt" für den aktuellen Zustand eines Steckdose.

Die Erfindung wird nachstehend an Hand der in der Zeichnung dargestellten Ausführungsbeispiele erläutert. Es zeigen:
- Fig. 1: eine Sicht auf die Frontseite eines elektrischen Installationsschalters mit Funktionshinweis,
- Fig. 2: eine Seitenansicht eines elektrischen Installationsschalters mit Funktionshinweis.

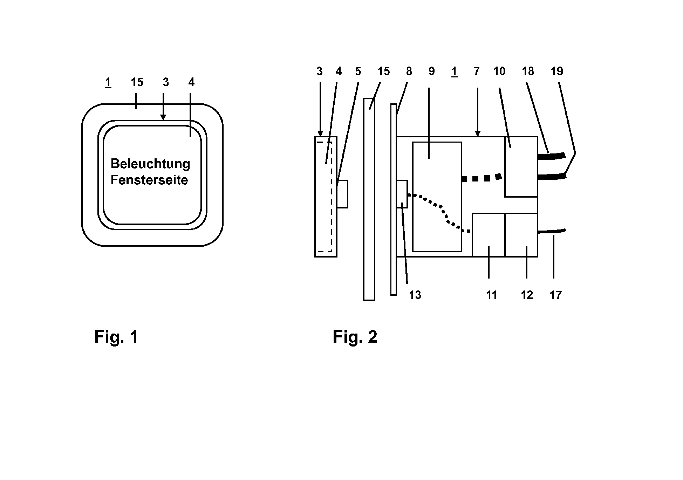

In Fig. 1 ist eine Sicht auf die Frontseite eines elektrischen Installationsschalters mit Funktionshinweis dargestellt. Es sind eine mechanische Wippe 3 mit einem darin integrierten Display 4 und ein Abdeckrahmen 15 des elektrischen Installationsschalters 1 zu erkennen. Im Display 4 wird z. B. ein Funktionshinweis "Beleuchtung Fensterseite" in Textform angezeigt, der die Funktion des elektrischen Installationsschalters 1 angibt. Im gezeigten Beispiel gibt der Funktionshinweis an, dass die betreffende mechanische Wippe des Installationsschalters zum Einschalten / Ausschalten der Beleuchtung an der Fensterseite dient. Als Display kann beispielsweise in Form eines OLED-Dünnfilmbauelements (Organic Light Emitting Diode) oder alternativ in Form eines Elektronischen Papiers (E-Papier, E-Ink) ausgebildet sein.

In Fig. 2 ist eine Seitenansicht eines elektrischen Installationsschalters mit Funktionshinweis dargestellt. Dabei sind die Baukomponenten des elektrischen Installationsschalters 1 nicht bei montiertem Zustand, sondern jeweils separat gezeigt, und zwar
- die mechanische Wippe 3 mit in gestrichelter Linienform angedeutetem integriertem Display 4 und einem an der Rückseite der mechanischen Wippe 3 angeordneten elektrischen Anschlussblock 5 dieses Displays 4,
- der Abdeckrahmen 15,
- ein Gerätesockel 7 mit frontseitigem Tragring 8, wobei dieser Gerätesockel 7 eine Schalteinrichtung 9 aufweist, welche mit einem Energieversorgung/Verbraucher-Anschlussblock 10 elektrisch verbunden und mechanisch durch die Wippe 3 zu betätigen ist.

Des Weiteren weist der Gerätesockel 7 eine Display-Ansteuereinheit 11 auf, welche einerseits elektrisch mit einem an der Frontseite des Gerätesockels 7 angeordneten Display-Anschlussblock 13 und andererseits mit einer an der Rückseite des Gerätesockels 7 angeordneten Bus-Anschlusseinheit 12 verbunden ist. An der Rückseite des Gerätesockels 7 sind mit der Bus-Anschlusseinheit 12 verbundene Bus-Anschlussleitungen 17 eines Bussystems sowie jeweils mindestens eine mit dem Energieversorgung/Verbraucher-Anschlussblock 10 verbundene Energieversorgungs-Anschlussleitung 18 und Verbraucher-Anschlussleitung 19 skizziert.

Im montierten Zustand greifen der Anschlussblock 5 und der Display-Anschlussblock 13 kontaktierend ineinander, so dass eine Ansteuerung des Displays 4 aus dem Bussystem (respektive über eine Steuereinheit des Bussystems) über den Anschlussblock 5, den Display-Anschlussblock 13, die Display-Ansteuereinheit 11, die Bus-Anschlusseinheit 12 und die Bus-Anschlussleitungen 17 erfolgen kann. Vorzugsweise wird ein Bussystem der Gebäudesystemtechnik verwendet, wie beispielsweise KNX (Konnex).

Der Inhalt des im Display 4 dargestellten Funktionshinweises respektive Display-Inhalt kann für jeden konkreten Anwendungsfall speziell angepasst und durch das Bussystem vorgegeben werden, beispielsweise "Beleuchtung Raum", "Beleuchtung Fensterseite", "Jalousie der Balkontür" usw. Dies ist insbesondere bei Räumen nützlich, deren Nutzung sich verändert und deren Elektroinstallation flexibel angepasst werden kann.

Der Funktionshinweis des Displays 4 kann auch geändert werden, falls sich die Nutzer des Raumes ändern. Ein Beispiel hierfür sind Funktionshinweise in verschiedenen Sprachen in einem Hotelzimmer, wie z. B. "Light" oder "Licht" / "Dimming" oder "Dimmen" /"Scene" oder "Lichtszene" / "Blind" oder "Jalousie" usw., je nachdem, ob ein englischsprachiger oder deutschsprachiger Hotelgast das Hotelzimmer bewohnt. Der Funktionshinweis kann sich auch in Abhängigkeit der Betätigung der Wippe ändern, beispielsweise von "An" in "Aus" wechseln (und umgekehrt). Des Weiteren kann zusätzlich "geschaltet" als Display-Inhalt respektive Funktionshinweis angezeigt werden.

Auch wenn vorstehend ein Installationsschalter als Beispiel für ein Elektro-Installationsgerät behandelt worden ist, so sind die vorstehenden Ausführungen in äquivalenter Weise auch für andersartige Installationsgeräte, wie Drehdimmer und Steckdosen gültig. Allgemein kann sich das Display auch im Abdeckrahmen oder ganz allgemein auf / in der Zentralscheibe befinden, um derart z. B. eine Steckdose oder einen Drehdimmer zu beschriften. Die Änderung des Display-Inhaltes respektive Funktionshinweises kann auch alternativ drahtlos via Funk oder durch eine dezidierte lokale Schnittstelle erfolgen. Bei einer Steckdose kann sich beispielweise der Display-Inhalt in Abhängigkeit des aktuellen elektrischen Zustandes ändern in "bestromt".

### Bezugszeichenliste

| | |
|---|---|
| 1 | elektrischer Installationsschalter |
| 2 | - |
| 3 | mechanische Wippe |
| 4 | Display |
| 5 | elektrischer Anschlussblock |
| 6 | - |
| 7 | Gerätesockel |
| 8 | Tragring |
| 9 | Schalteinrichtung |
| 10 | Energieversorgung/Verbraucher-Anschlussblock |
| 11 | Display-Ansteuereinheit |
| 12 | Bus-Anschlusseinheit |
| 13 | Display-Anschlussblock |
| 14 | - |
| 15 | Abdeckrahmen |
| 16 | - |
| 17 | Bus-Anschlussleitungen eines Bussystems |
| 18 | Energieversorgungs-Anschlussleitung |
| 19 | Verbraucher-Anschlussleitung |

## Patentansprüche

1. Elektro-Installationsgerät, insbesondere Installationsschalter (1), mit Funktionshinweis, **dadurch gekennzeichnet, dass** ein Display (4) in der Zentralscheibe oder im Abdeckrahmen integriert und mit einer Display-Ansteuereinheit (11) verbunden ist, wobei Mittel zur Vorgabe und Änderung des aktuell anzuzeigenden Funktionshinweises vorgesehen sind.

2. Elektro-Installationsgerät nach Anspruch 1, **dadurch gekennzeichnet, dass** als Mittel zur Vorgabe und Änderung des aktuell anzuzeigenden Funktionshinweises eine Bus-Anschlusseinheit (12) dient, welche mit der Display-Ansteuereinheit (11) verbunden ist, wobei die Bus-Anschlusseinheit (12) mit einem Bussystem verbunden ist und der gewünschte Funktionshinweis über das Bussystem vorgegeben und beim Display (4) zur Anzeige gebracht wird.

3. Elektro-Installationsgerät nach Anspruch 1, **dadurch gekennzeichnet, dass** als Mittel zur Vorgabe und Änderung des aktuell anzuzeigenden Funktionshinweises eine Funkeinrichtung dient, welche mit der Display-Ansteuereinheit (11) verbunden ist, wobei der Funkeinrichtung der gewünschte Funktionshinweis vorgegeben und beim Display (4) zur Anzeige gebracht wird.

4. Elektro-Installationsgerät nach Anspruch 1, **dadurch gekennzeichnet, dass** als Mittel zur Vorgabe und Änderung des aktuell anzuzeigenden Funktionshinweises eine lokale Schnittstelle dient, welche mit der Display-Ansteuereinheit (11) verbunden ist, wobei der lokalen Schnittstelle der gewünschte Funktionshinweis vorgegeben und beim Display (4) zur Anzeige gebracht wird.

5. Elektro-Installationsgerät nach Anspruch 1, **dadurch gekennzeichnet, dass** ein Display (4) in die Frontseite einer zur Betätigung einer Schalteinrichtung (9) dienenden mechanischen Wippe (3) integriert ist.

6. Elektro-Installationsgerät nach Anspruch 1, **dadurch gekennzeichnet, dass** das Display (4) einen elektrischen Anschlussblock (5) aufweist, welcher im montierten Zustand elektrisch kontaktierend mit einem korrespondierend ausgebildeten Display-Anschlussblock (13) des Gerätesockels (7) verbunden ist.

7. Elektro-Installationsgerät nach Anspruch 1, **dadurch gekennzeichnet, dass** das Display (4) als OLED-Dünnfilmbauelement (Organic Light Emitting Diode) ausgebildet ist.

8. Elektro-Installationsgerät nach Anspruch 1, **dadurch gekennzeichnet, dass** das Display (4) in Form eines Elektronischen Papiers (E-Papier, E-Ink) ausgebildet ist.

9. Elektro-Installationsgerät nach Anspruch 1, **dadurch gekennzeichnet, dass** automatisch eine Änderung des Funktionshinweises in Abhängigkeit einer Betätigung des Elektro-Installationsgeräts erfolgt.

10. Elektro-Installationsgerät nach Anspruch 1, **dadurch gekennzeichnet, dass** automatisch eine Änderung des Funktionshinweises in Abhängigkeit vom elektrischen Zustand des Elektro-Installationsgeräts erfolgt.
